# EUROPEAN PATENT APPLICATION

(11) **EP 2 353 379 A1**
(43) Date of publication of application: **10.08.2011**
(21) Application number: 11152009.4
(22) Date of filing: 25.01.2011
(51) Int. Cl.: A01K 13/00

(54) **A surcingle system**

(30) Priority: 29.01.2010 IE 20100047
(71) Applicant: MacGuinness, Thomas Peter, Dromiskin County Louth (IE)
(72) Inventor: MacGuinness, Thomas Peter, Dromiskin County Louth (IE)
(74) Representative: Ryan, John Mary

(57) **Abstract**

A surcingle system for securing a horse blanket (10) under a horse's belly in use, has a pair of adjustable straps (11) and (12 not shown) releasably attached to one side (13) of the blanket 10. Strap (11) is connected to a releasable attaching point (22) on the blanket (10) by a frangible coupling (21). When a force equal to or greater than the breaking strain of the frangible coupling (21) is applied to the strap (11) the frangible coupling (21) will break and the strap (11) will separate from the blanket (10) without damage being caused thereto.

## Description

The present invention relates to a surcingle system and, in particular, to a surcingle system for securing a horse blanket under a horse's belly in use.

Surcingle systems are use to secure a horse blanket under a horse's belly and are particularly used for turnout blankets, which wrap under the belly and are kept in place by the surcingle system.

A surcingle system is known which consists of an adjustable strap attached to one side of a horse blanket, which strap has a first part of a two-part surcingle buckle attached to the free end thereof. This free end is brought under the belly of the horse and the first part of the two-part surcingle buckle is connected to the second part of the two-part surcingle buckle, which is attached to the other side of the blanket. Two straps are used to secure the blanket under the belly and they are attached to the blanket in such a way that they cross over under the belly of the horse. The length of each strap is adjusted to provide a secure fit for a particular horse while not being over tightened as this would cause discomfort for the horse. Both parts of the surcingle system are securely stitched to the blanket.

The above surcingle system works quite well and is in common use. However, problems can arise when the surcingle strap gets caught on an object such as a fence or the branch of a bush or tree, while the horse is outdoors. In an attempt to free itself one or the other part of the surcingle system may be ripped from the blanket causing damage thereto.

Damage to the blanket can also occur in the stable when a horse catches his leg in the strap, for example when it is getting up from the floor after rolling in its bed. The blanket will tend to shift as the horse struggles. In this situation the horse may panic and the end result will be the surcingle will be ripped from the blanket resulting in a torn blanket and a traumatised animal.

It is an object of the present invention to provide a surcingle system for a horse blanket which overcomes the disadvantages of the aforementioned system.

Thus, the invention provides a surcingle system for securing a horse blanket under a horse's belly in use, the surcingle system comprising an adjustable strap, means for releasably attaching a first end of the strap to one side of the blanket, one part of a two-part surcingle buckle being attached to the other end of the strap, the other part of the two-part surcingle buckle being attached to the other side of the blanket, and a frangible coupling member mountable between the strap and the attachment means, such that, in use, the surcingle strap will separate from the blanket, without tearing the blanket, when a shearing force equal to or greater than the breaking strain of the frangible coupling member is applied to the strap.

An advantage of the surcingle system according to the invention is that as soon as the strap gets caught on an object and the horse starts to pull away, or where the horse catches his leg in the surcingle and starts to struggle, the frangible coupling member will break and the horse will be freed.

Moreover, neither the attaching means for the strap nor the other part of the two-part surcingle buckle will be torn off the blanket causing it to rip.

To repair the blanket all that is required is to replace the broken frangible coupling member with a new one. The strap can then be reattached to the blanket.

Preferably, the breaking strain of the frangible coupling member is matched to the strength of a horse on which the blanket is to be used.

By having a range of frangible coupling members of differing breaking strains the most appropriate coupling member can be fitted to a blanket for a particular horse. Alternatively, a range of blankets of a particular size can be produced already fitted with different strength coupling members.

In one embodiment of the invention the adjustable strap has an attachment loop at the first end by means of which the strap is releasably attachable to the frangible coupling member, the attachment loop being directly attachable to the attachment means following breakage of the coupling member in use.

An advantage of this arrangement is that in the event that a horse breaks one of the coupling members, following an incident, the blanket can be temporarily repaired and returned to use pending the sourcing of a replacement coupling member. Thus, the horse is not left without a serviceable blanket.

In a further embodiment of the invention the other part of the two-part surcingle buckle is releasably attachable to the blanket.

An advantage of this feature of the invention is that in the event that the other part of the two-part buckle needs replacing this can be achieved on the spot without having to send the blanket for repair.

The invention will be further illustrated by the following description of an embodiment thereof, given by way of example only with reference to the accompanying drawings in which:
Fig. 1 is a plan view, from above, of a horse blanket with a surcingle system according to the invention;
Fig. 2 is an enlarged view of a surcingle strap as circled in Fig 1;
Fig. 3 is a view from below of the surcingle strap of Fig. 2, with a separate frangible coupling;
Fig. 4 is a perspective view of the surcingle strap of Fig. 2 with an attaching point in an open position; and
Fig. 5 is an enlarged view from above of the surcingle strap of Fig. 2.

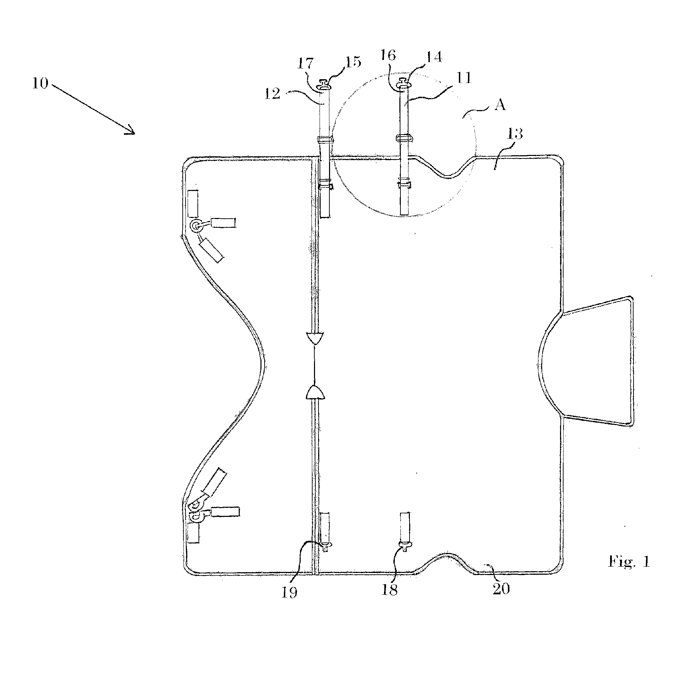

Referring to Fig. 1 there is illustrated, generally at 10, a horse blanket with a surcingle system according to the invention comprising a pair of adjustable straps 11, 12 releasably attached to one side 13 of the blanket 10 and having one part 14, 15 of a two-part surcingle buckle attached to free ends 16, 17 respectively, of the straps 11, 12. The other parts 18, 19 of the two-part surcingle buckle are attached to the other side 20 of the blanket 10.

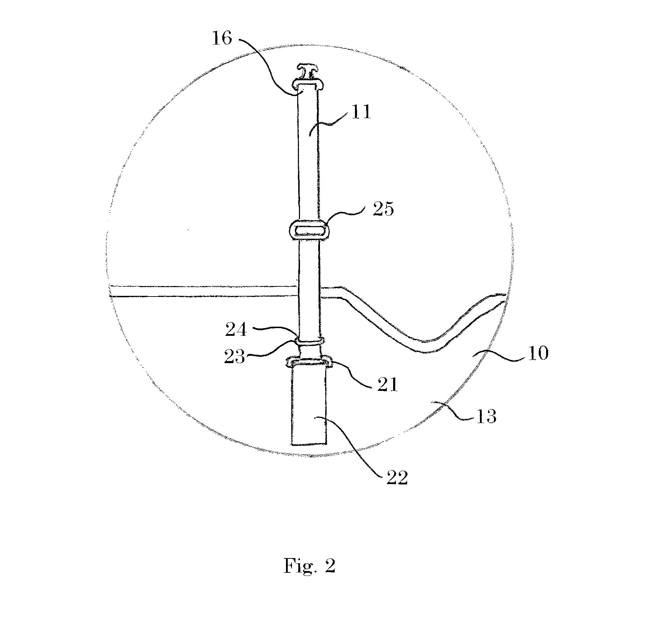

Referring to Fig. 2, strap 11, encircled in Fig. 1 at A, is illustrated in an enlarged view. A frangible coupling 21 connects the strap 11 to means for releasably attaching the strap 11 to the blanket 10 in the form of a releasable attaching point 22, which attaching point 22 is firmly attached to side 13 of the blanket 10. The frangible coupling 21 is made of plastics material. A stainless steel attachment loop 23 is attached to the strap 11 at end 24. The strap 11 is attached to the blanket through the frangible coupling 21 by passing the free end 16 through the coupling 21 and back through the attachment loop 23, the strap 21 then being pulled tight. The strap 11 is threaded through an adjusting buckle 25 so that the length of the strap 11 may be adjusted.

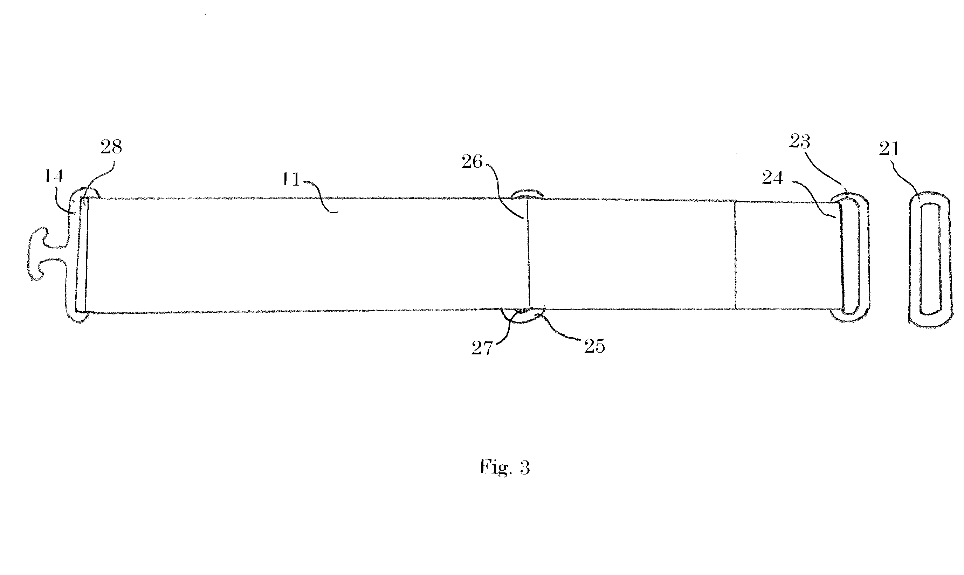

Referring to Fig. 3, the strap 11 is shown separated from the blanket 10 (not shown). The attachment loop 23 at end 24 of the strap 11 is hanging free. The frangible coupling 21 is shown to one side of the strap 11.

An end 26 of the strap 11 is attached to a central bar 27 of the adjusting buckle 25. The strap 11 runs from end 26 through a slot 28 in part 14 of the two-part surcingle buckle, back through the adjusting buckle 25 and on to end 24 of the strap 11. The position of the adjusting buckle 25 on the strap 11 determines the usable length of the strap 11.

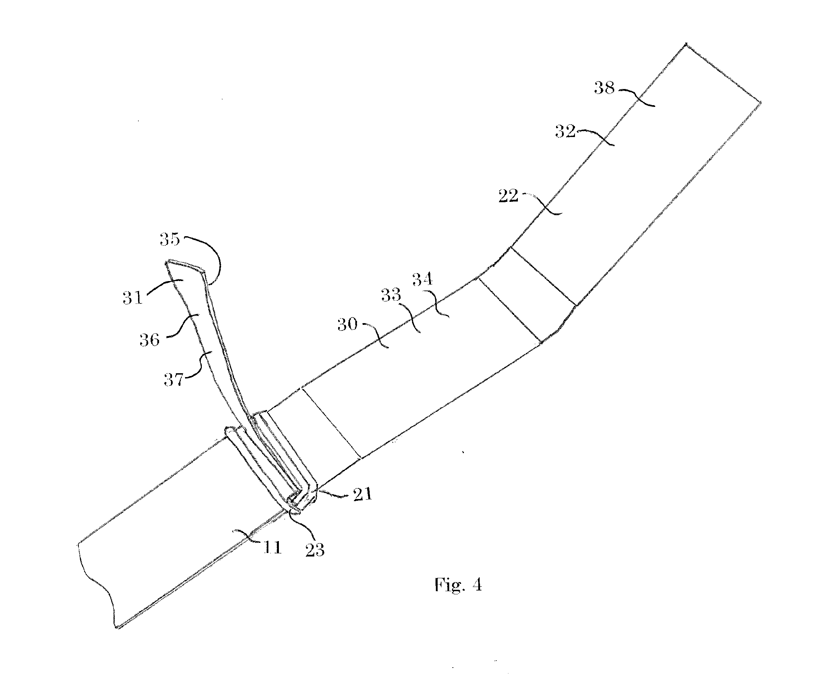

Referring to Fig. 4, the releasable attaching point 22 is shown in an open position. The releasable attaching point 22 is divided into a base section 30, which is firmly attached to the blanket 10 (not shown), a middle section 31, which is foldable over onto the base section 30 to entrap the frangible coupling 21, and a top section 32, which in turn is foldable over the middle section 31 to secure the frangible coupling 21 to the blanket 10 (not shown). The releasable attaching point 22 is held together in the closed position by a Velcro^{®} patch 33 (Velcro is a registered trade mark for a type of hook and loop fabric fastener consisting of two pieces of fabric, one covered with a plurality of fibre hooks and the other covered with a plurality of fibre loops, which when brought together stick strongly one to the other) on side 34 of the base section 30 which cooperates with a Velcro patch (not shown) on one side 35 of the middle section 31. A further Velcro patch 36 on the other side 37 of the middle section 31 cooperates with a Velcro patch 38 on side 39 of the top section 32. Thus, the combination of Velcro patches 33, 36, and 38 together with the Velcro patch (not shown) on side 35 of the middle section 31, create the strong attaching point 22. Strap 11 is shown attached to the coupling 21.

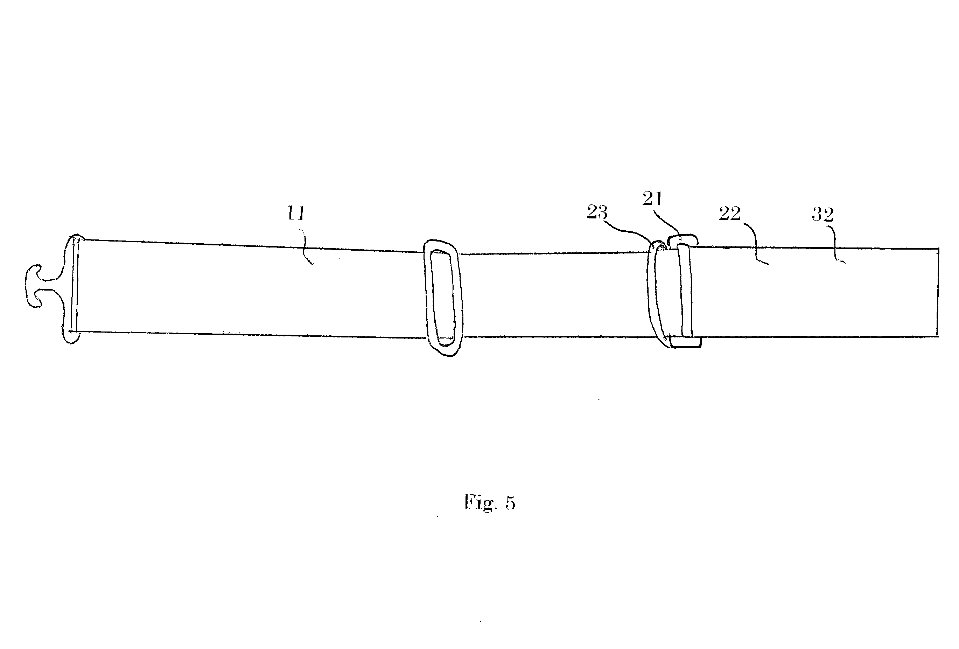

Referring to Fig. 5 the strap 11 is shown from above attached to the releasable attaching point 22, of which only the top section 32 is visible.

Referring to Figs 2 to 5, in use, the strap 11 is normally attached to the blanket 10 (Fig. 2) through the frangible coupling 21. If a force equal to or greater than the breaking strain of the frangible coupling 21 is applied to the strap 11 the frangible coupling 21 will break and the strap will be released from the blanket 10 without any damage thereto.

As a temporary measure, following the breaking of the frangible coupling 21, the strap 11 can be directly attached to the attaching point 22, by first releasing the attaching point 22 and threading the middle section 31 (Fig. 4) through the stainless steel attachment loop 23 and then reclosing the attaching point 22. Thus, the blanket 10 can continue to be used while a new frangible coupling 21 is being sourced.

## Claims

1. A surcingle system for securing a horse blanket (10) under a horse's belly in use, the surcingle system comprising an adjustable strap (11), means (22) for releasably attaching a first end (24) of the strap (11) to one side (13) of the blanket (10), one part (14) of a two-part surcingle buckle (14, 18) being attached to the other end (16) of the strap (11), the other part (15) of the two-part surcingle buckle (14, 18) being attached to the other side (20) of the blanket (10), and a frangible coupling member (21) mountable between the strap (11) and the attachment means (22), such that, in use, the surcingle strap (11) will separate from the blanket (10), without tearing the blanket (10), when a shearing force equal to or greater than the breaking strain of the frangible coupling member (21) is applied to the strap (11).

2. A surcingle system according to Claim 1, wherein the breaking strain of the frangible coupling member (21) is matched to the strength of a horse on which the blanket (10) is to be used.

3. A surcingle system according to Claim 1 or 2, wherein the adjustable strap (11) has an attachment loop (23) at the first end (24) by means of which the strap (11) is releasably attachable to the frangible coupling member (21), the attachment loop (23) being directly attachable to the attachment means (22) following breakage of the frangible coupling member (21) in use.

4. A surcingle system according to any preceding claim, wherein the other part (18) of the two-part surcingle buckle (14, 18) is releasably attachable to the blanket (10).

5. A surcingle system according to any preceding claim, wherein the releaseably attachment means is a releasable attaching point (22) divided into a base section (30), which is attached to the blanket (10), a middle section (31), which is foldable over onto the base section (30) to entrap the frangible coupling (21), and a top section (32), which is foldable over the middle section (31) to secure the frangible coupling (21) to the blanket (10).

6. A surcingle system according to Claim 5, wherein the releasable attaching point (22) is held together in a closed position by Velcro^{®} patches (33, 36, and 38).
